# EUROPEAN PATENT APPLICATION

(11) **EP 1 909 284 A1**
(43) Date of publication of application: **09.04.2008**
(21) Application number: 07112797.1
(22) Date of filing: 19.07.2007
(51) Int. Cl.: G11B 27/034, G11B 27/10

(54) **Sound mixing processing apparatus and sound mixing processing method**

(30) Priority: 29.09.2006 JP 2006268024
(71) Applicant: Kabushiki Kaisha Toshiba, Tokyo 105-8001 (JP)
(72) Inventor: Mukaide, Takanobu Toshiba Corporation Intellectual Property Division, Tokyo 105-8001 (JP); Nomura, Katsuyuki Toshiba Corporation Intellectual Propert Division, Tokyo 105-8001 (JP)
(74) Representative: Henkel, Feiler & Hänzel

(57) **Abstract**

According to one embodiment, there is provided a sound mixing processing apparatus (41) including: an input unit (51) inputting N-channel (N ≥ 3) sound data and two-channel sound data; a mixing unit (63) mixing the N-channel sound data and the two-channel sound data inputted from the input unit (51) to output N-channel sound data produced by the mixing; and a down-mix processing unit (65) obtaining two-channel sound data produced by down-mixing and gain-adjusted, from the N-channel sound data inputted from the mixing unit (63), to output the obtained sound data.

## Description

### BACKGROUND

### 1. Field

One embodiment of the invention relates to a sound mixing processing apparatus and a sound mixing processing method used in a reproducing apparatus such as, for example, an optical disk apparatus.

### 2. Description of the Related Art

The standard of next-generation high-vision-compatible DVD called a HD (high definition) DVD, a blue-ray disk, or the like demands that a reproducing apparatus should realize simultaneous output of N-channel (N ≥ 3) sound and two-channel sound produced by down-mixing. For this purpose, it has been considered to use, in a reproducing apparatus, a sound mixing processing apparatus which simultaneously outputs N-channel sound data and two-channel sound data to which the N-channel-sound data is down-mixed (see, for example, Japanese Patent Application Publication (KOKAI) No. 2006-197391).

The sound mixing processing apparatus described in Japanese Patent Application Publication (KOKAI) No. 2006-197391 includes a mixing unit mixing a plurality of sound data to output the resultant and a down-mix unit down-mixing the sound data outputted from the mixing unit to output the resultant. The sound data from the mixing unit and the sound data from the down-mix unit are outputted from the sound mixing processing apparatus.

### SUMMARY OF THE INVENTION

Computation processing to down-mix N-channel sound data to two-channel sound data is generally based on matrix operation. That is, computation processing of the N-channel sound data based on a desired matrix expression gives two-channel sound data. In this case, since the sound data of the N channels are added by the matrix operation, sound level of two-channel reproduction output based on the two-channel sound data produced by the down-mixing becomes higher than sound level of N-channel reproduction output based on the N-channel sound data. Therefore, if sound output of a reproducing apparatus is switched between the N-channel output and the two-channel output, sound level greatly changes.

Therefore, the invention was made in consideration of the above circumstances, and an object thereof is to provide a sound mixing processing apparatus and a sound mixing processing method capable of preventing a great difference in sound level between N-channel reproduction output and two-channel reproduction output.

A sound mixing processing apparatus according to the invention includes: an input unit inputting N-channel sound data and two-channel sound data; a mixing unit mixing the N-channel sound data and the two-channel sound data inputted from the input unit to output N-channel sound data produced by the mixing; and a down-mix processing unit obtaining two-channel sound data produced by down-mixing and gain-adjusted, from the N-channel sound data inputted from the mixing unit, to output the obtained sound data.

Further, a sound mixing processing apparatus according to the invention includes: an input unit inputting N-channel sound data and two-channel sound data; a first mixing unit mixing the N-channel sound data and the two-channel sound data inputted from the input unit to output N-channel sound data produced by the mixing; a down-mix processing unit obtaining two-channel sound data produced by down-mixing and gain-adjusted, from the N-channel sound data inputted from the input unit, to output the obtained sound data; and a second mixing unit mixing the two-channel sound data inputted from the input unit and the two-channel sound data produced by the down-mixing and gain-adjusted, which is inputted from the down-mix processing unit, to output two-channel sound data produced by the mixing.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is a block diagram showing the configuration of an optical disk apparatus according to an embodiment of the invention;

FIG. 2 is a schematic view showing the structure of a pickup of the optical disk apparatus according to this embodiment;

FIG. 3 is a block diagram showing the configuration of a sound mixing processor;

FIG. 4 is a flowchart to describe the operation of the sound mixing processor shown in FIG. 3;

FIG. 5 is a block diagram showing the configuration of a modified example of the sound mixing processor;

FIG. 6 is a block diagram showing the configuration of a modified example of the sound mixing processor;

FIG. 7 is a flowchart to describe the operation of the sound mixing processor shown in FIG. 6;

FIG. 8 is a block diagram showing the configuration of a modified example of the sound mixing processor; and

FIG. 9 is a block diagram showing the configuration of a modified example of the sound mixing processor.

### DETAILED DESCRIPTION

Various embodiments according to the invention will be described hereinafter with reference to the accompanying drawings.

In the following description, the same elements and elements having the same functions are denoted by the same reference numerals and symbols, and repeated description thereof will be omitted.

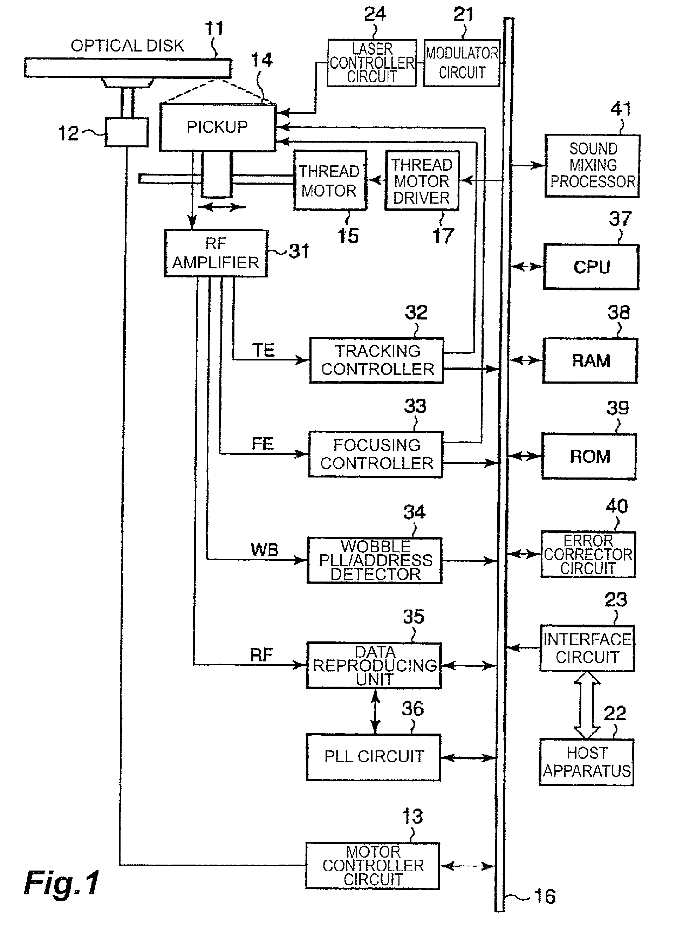

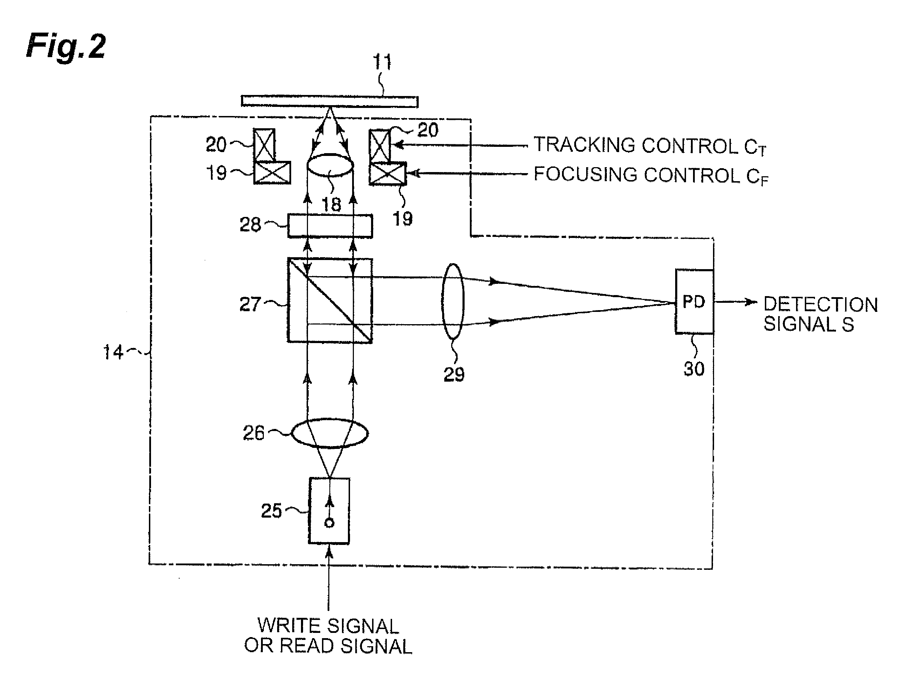

First, the configuration of an optical disk apparatus as a reproducing apparatus will be described with reference to FIG. 1 and FIG. 2. FIG. 1 is a block diagram showing the configuration of an optical disk apparatus according to this embodiment. FIG. 2 is a schematic view showing the structure of a pickup of the optical disk apparatus according to this embodiment. As an optical disk 11, an optical disk user data-recordable (or rewritable) or a read-only optical disk is usable, and this embodiment is described on assumption that the optical disk 11 is an optical disk including a next-generation recordable (or rewritable) DVD.

Examples of the recordable or rewritable optical disk 11 are next-generation DVD-RAM (random access memory), DVD-RW (rewritable), DVD-R (recordable), and the like which use blue laser beam with a wavelength of around 405 nm, or current-generation DVD-RAM, DVD-RW, DVD-R, and the like which use red laser beam with a wavelength of around 650 nm.

On a front surface of the optical disk 11, land tracks and groove tracks are spirally formed. The optical disk 11 is driven by the rotation of a spindle motor 12. The rotation speed of the spindle motor 12 is controlled by a motor controller circuit 13.

Data is recorded and reproduced to/from the optical disk 11 via a pickup 14. The pickup 14 is coupled to a thread motor 15 via a gear. The thread motor 15 is controlled by a thread motor driver 17 connected to a data bus 16. The thread motor 15 has a permanent magnet (not shown) in its fixed portion, and when a driving coil (not shown) is excited, the pickup 14 moves in a radial direction of the optical disk 11.

As shown in FIG. 2, an objective lens 18 is provided in the pickup 14. The objective lens 18 is movable in a focusing direction (an optical axis direction of the lens) when driven by a driving coil 19.
Further, the objective lens 18 is movable in a tracking direction (a direction perpendicular to the optical axis of the lens) when driven by a driving coil 20. The pickup 14 can perform a track jump operation by moving a beam spot of the laser beam.

A modulator circuit 21 generates EFM (eight to fourteen modulation) data from user data supplied from a host apparatus 22 via an interface circuit 23 at the time of data recording. The EFM data is generated as a result of, for example, 8-14 modulation of the user data. A laser controller circuit 24 supplies a write signal to a semiconductor laser diode 25 based on the EFM data supplied from the modulator circuit 21, at the time of data recording (at the time of mark formation).

The laser controller circuit 24 supplies a read signal smaller than the write signal to the semiconductor laser diode 25 at the time of data reading. The semiconductor laser diode 25 emits a laser beam according to the write signal supplied from the laser controller circuit 24. The laser beam emitted from the semiconductor laser diode 25 is radiated onto the optical disk 11 through a collimator lens 26, a half prism 27, an optical system 28, and the objective lens 18. Light reflected by the optical disk 11 is guided to a photo-detector 30 through the objective lens 18, the optical system 28, the half prism 27, and a condenser lens 29.

The photo-detector 30 is made up of four-split photo-detection cells and supplies detection signals A, B, C, D from the respective photo-detection cells to an RF (radio frequency) amplifier 31. The RF amplifier 31 supplies a tracking error signal TE to a tracking controller 32. The tracking error signal TE can be obtained from, for example, (A + D) - (B + C) based on a push-pull method. The RF amplifier 31 supplies a focusing error signal FE to the focusing controller 33. The focusing error signal FE can be obtained from, for example, (A + C) - (B + D) based on an astigmatic method.

The RF amplifier 31 supplies a wobble signal WB to a wobble PLL/address detector 34. The wobble signal WB can be obtained from, for example, (A + D) - (B + C). The RF amplifier 31 supplies a RF signal to a data reproducing unit 35. The RF signal can be obtained from (A + D) + (B + C).

An output signal of the focusing controller 33 is supplied to the focusing-direction driving coil 19. Consequently, the laser beam is controlled so as to be constantly just focused on a recording film. The tracking controller 32 generates a tracking driving signal according to the tracking error signal TE to supply the tracking driving signal to the tracking-direction driving coil 20.

As a result of the focusing control and the tracking control, the RF signal which is the sum of the output signals from the photo-detection cells of the photo-detector 30 reflects a change in reflectance from pits or the like which are formed on tracks of the optical disk 11 according to recording data. The RF signal is supplied to the data reproducing unit 35.

The data reproducing unit 35 reproduces recording data based on a reproduction clock signal from a PLL circuit 36. The data reproducing unit 35 has a function of measuring an amplitude of the RF signal. A measured value of the amplitude of the RF signal is read by a CPU (central processing unit) 37.

When the objective lens 18 is under control of the tracking controller 32, the thread motor 15 is controlled to locate the objective lens 18 at an optimum position of the optical disk 11. Consequently, the pickup 14 is controlled.

The motor controller circuit 13, the laser controller circuit 24, the focusing controller 33, the tracking controller 32, the data reproducing unit 35, the PLL circuit 36, and so on can be formed as a servo controller circuit in a single LSI chip.

These circuit portions are controlled by the CPU 37 via the data bus 16. The CPU 37 controls the whole optical disk apparatus based on operation commands supplied from the host apparatus 22 via the interface circuit 23 or based on operation data from a later-described operation unit.

The CPU 37 uses a RAM 38 as its work area and performs predetermined operations according to a program recorded in a ROM (read only memory) 39.

The data reproduced in the data reproducing unit 35 undergo error correction processing in the error corrector circuit 40 and thereafter, based on the error-corrected data, video, sub video (for example, PinP: Picture in Picture or the like), sound, and the like are reproduced.

The plural digital sound data having undergone the error correction processing are supplied to the sound mixing processor 41 to undergo mixing processing there and can be outputted to an external part of the optical disk apparatus. The plural digital sound data include encoded N-channel (N ≥ 3) sound data and a plurality of (two in this embodiment) encoded two-channel sound data. The N-channel sound data is, for example, a main sound source of video. One of the two-channel sound data is, for example, a sub sound source of sub video and the like.
The other two-channel sound data is, for example, effect sound.

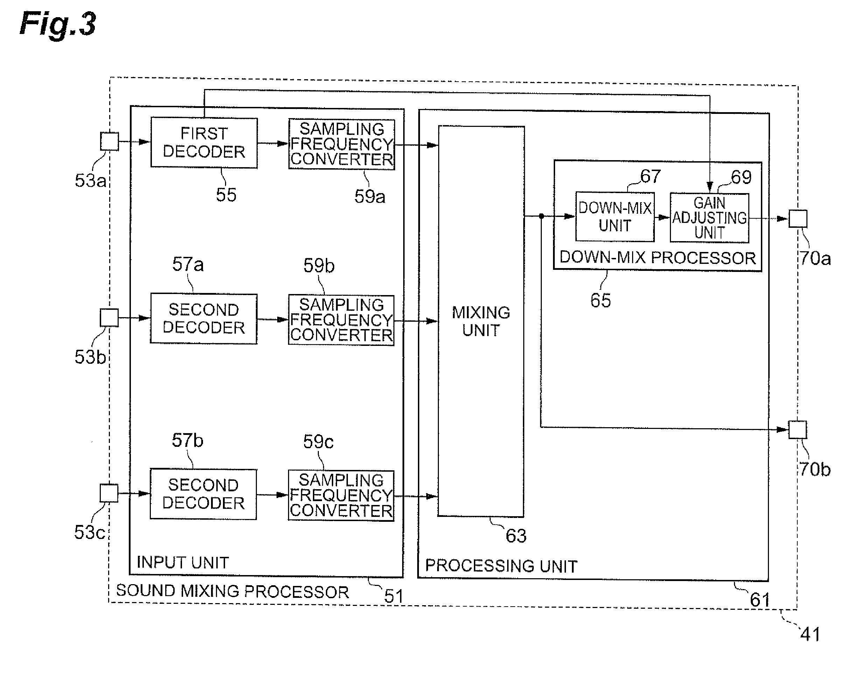

Next, the configuration of the sound mixing processor 41 will be described with reference to FIG. 3. The sound mixing processor 41 includes an input unit 51 and a processing unit 61. FIG. 3 is a block diagram showing the configuration of the sound mixing processor.

The input unit 51 includes a first decoder 55, a plurality of (two in this embodiment) second decoders 57a, 57b, and a plurality of (three in this embodiment) sampling frequency converters 59a, 59b, 59c. The aforesaid encoded N-channel sound data and two encoded two-channel sound data are supplied to corresponding sound input ports 53a, 53b, 53c respectively.

The sound data supplied to the sound input port 53a is inputted to the first decoder 55. The first decoder 55 decodes the encoded N-channel sound data inputted thereto to output the resultant. At this time, the first decoder 55 obtains gain adjustment information included in the encoded N-channel sound data. The first decoder 55 outputs the obtained gain adjustment information to the processing unit 61.

The sound data supplied to the sound input ports 53b, 53c are inputted to the second decoders 57a, 57b respectively. The second decoders 57a, 57b decode the encoded two-channel sound data inputted thereto to output the resultants.

The sound data outputted from the first decoder 55 and the second decoders 57a, 57b are inputted to the corresponding sampling frequency converters 59a, 59b, 59c respectively. The sampling frequency converters 59a, 59b, 59c convert sampling frequencies of the sound data decoded by the first and second decoders 55, 57a, 57b to a predetermined sampling frequency. Consequently, the sampling frequencies of the sound data decoded by the first and second decoders 55, 57a, 57b are converted to the same sampling frequency.

The decoded sound data whose sampling frequencies are converted to the same sampling frequency are supplied to the processing unit 61. That is, the input unit 51 inputs to the processing unit 61 the N-channel sound data and the two-channel sound data which have been decoded and converted to the same sampling frequency.

The processing unit 61 has a mixing unit 63 and a down-mix processor 65.

The sound data supplied from the input unit 51 are inputted to the mixing unit 63. The mixing unit 63 applies mixing processing to the inputted sound data, based on a predetermined mixing coefficient. Specifically, the mixing unit 63 mixes the N-channel sound data and the two two-channel sound data based on the predetermined mixing coefficient and outputs N-channel sound data produced by the mixing of these sound data.

The N-channel sound data outputted from the mixing unit 63 is inputted to the down-mix processor 65. The down-mix processor 65 has a down-mix unit 67 and a gain adjusting unit 69.

The down-mix unit 67 down-mixes the N-channel sound data outputted from the mixing unit 63 to two-channel sound data and outputs the two-channel sound data produced by the down-mixing.

Based on the gain adjustment information outputted from the first decoder 55, the gain adjusting unit 69 adjusts a gain of the two-channel sound data outputted from the down-mix unit 67 to output the two-channel sound data which have been gain-adjusted. Here, the gain adjusting unit 69 adjusts the gain of the two-channel sound data to the decreasing side so that sound level of two-channel reproduction output becomes substantially equal to sound level of N-channel reproduction output.

Having the down-mix unit 67 and the gain adjusting unit 69, the down-mix processor 65 obtains the two-channel sound data produced by the down-mixing and gain-adjusted, from the N-channel sound data inputted from the mixing unit 63, and outputs the obtained sound data.

As a result, the processing unit 61 obtains the N-channel sound data produced by the mixing and the two-channel sound data produced by the down-mixing and gain-adjusted, from the N-channel sound data and the two-channel sound data which are inputted from the input unit 51, and outputs these sound data from respective sound output ports 70a, 70b.

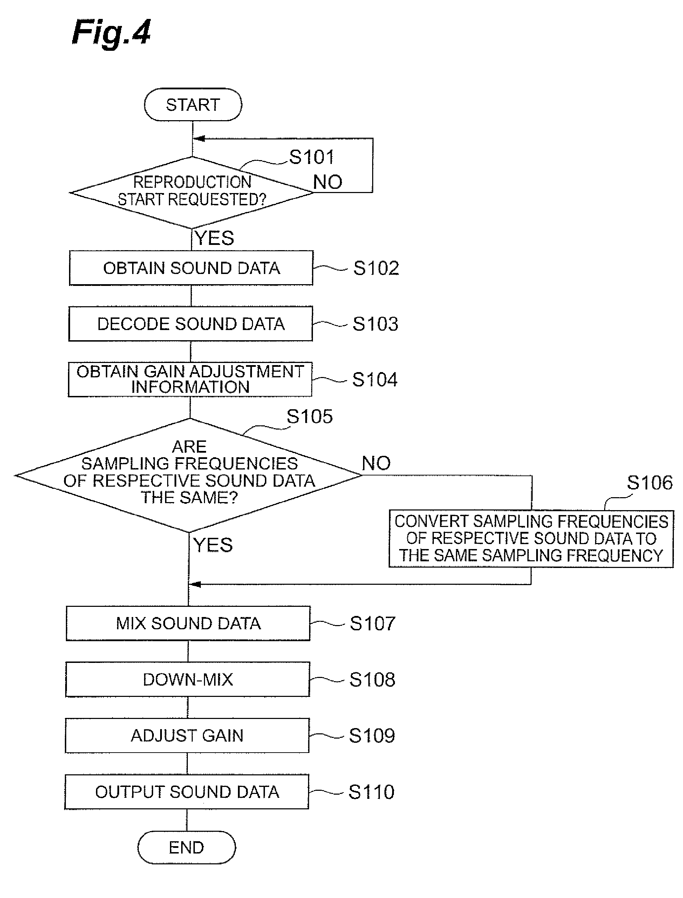

FIG. 4 is a flowchart to describe the operation of the sound mixing processor shown in FIG. 3. Specifically, when the processing is started, the CPU 37 of the optical disk apparatus determines whether or not reproduction start of the optical disk 11 has been requested (S101).

When determining that the reproduction has been requested, the CPU 37 obtains encoded sound data (N-channel sound data and two two-channel sound data) from the optical disk 11 (S102) and causes the decoders 55, 57a, 57b to decode the respective sound data (S103). Further, the CPU 37 causes the first decoder 55 to obtain gain adjustment information (S104). The gain adjustment information is recorded in an encoded state on the optical disk 11 based on the standard.

Then, the CPU 37 determines whether or not sampling frequencies of the respective decoded sound data are the same (S105). When determining that the sampling frequencies are not the same, the CPU 37 causes the sampling frequency converters 59a, 59b, 59c to convert the sampling frequencies of the respective sound data to the same sampling frequency (S106) .

When determining that the sampling frequencies are the same, the CPU 37 causes the mixing unit 63 to mix the sound data (the N-channel sound data and the two two-channel sound data) (S107).

Then, the CPU 37 causes the down-mix unit 67 to down-mix N-channel sound data produced by the mixing to two-channel sound data (S108). Next, the CPU 37 causes the gain adjusting unit 69 to adjust a gain of the two-channel sound data produced by the down-mixing, based on the gain adjustment information obtained by the first decoder 55 (S109).

Thereafter, the CPU 37 causes the processing unit 61 to output the N-channel sound data produced by the mixing and the two-channel sound data produced by the down-mixing and gain-adjusted (S110).

As described above, according to this embodiment, the sound mixing processor 41 outputs the N-channel sound data produced by the mixing and the two-channel sound data produced by the down-mixing and gain-adjusted. Therefore, it is possible to prevent a great difference in sound level between two-channel reproduction output based on the two-channel sound data produced by the down-mixing and N-channel reproduction output based on the N-channel sound data.

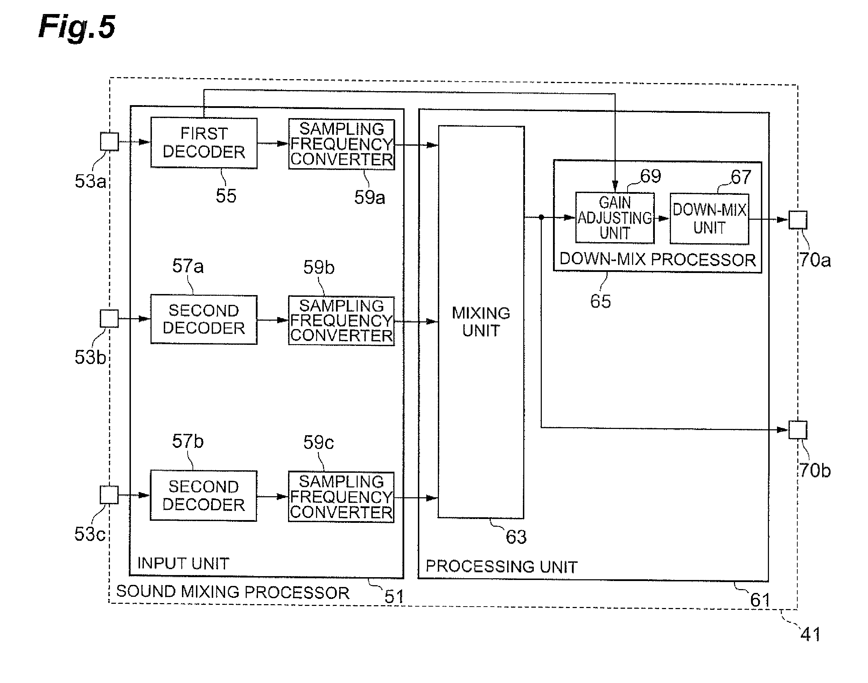

In the down-mix processor 65 shown in FIG. 3, the gain adjusting unit 69 is positioned on a subsequent stage of the down-mix unit 67, but the gain adjusting unit 69 may be positioned on a preceding stage of the down-mix unit 67 as shown in FIG. 5. In this case, the gain adjusting unit 69 adjusts a gain of the N-channel sound data outputted from the mixing unit 63, based on the gain adjustment information outputted from the first decoder 55, and outputs the gain-adjusted N-channel sound data. The down-mix unit 67 down-mixes the N-channel sound data outputted from the gain adjusting unit 69 to two-channel sound data and outputs the two-channel sound data gain-adjusted and produced by the down-mixing.

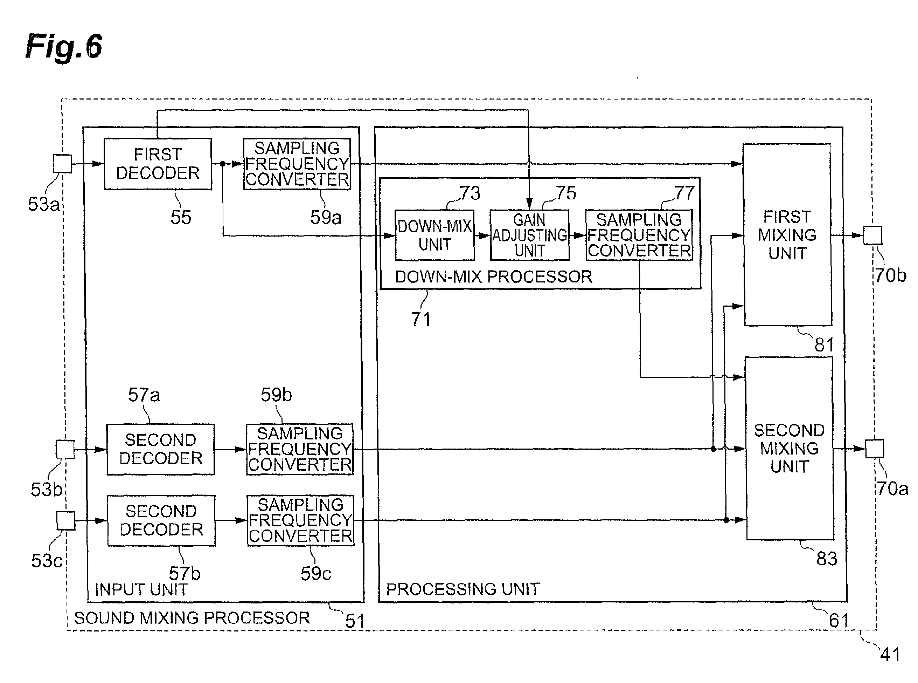

Next, the configuration of a modified example of the sound mixing processor 41 will be described with reference to FIG. 6. FIG. 6 is a block diagram showing the configuration of the modified example of the sound mixing processor. The configuration of a processing unit 61 of the sound mixing processor 41 shown in FIG. 6 is especially different from that of the sound mixing processor 41 shown in FIG. 3.

The processing unit 61 of the sound mixing processor 41 has a down-mix processor 71, a first mixing unit 81, and a second mixing unit 83.

The down-mix processor 71 has a down-mix unit 73, a gain adjusting unit 75, and a sampling frequency converter 77.

The down-mix unit 73 down-mixes N-channel sound data outputted from the first decoder 55 to two-channel sound data and outputs the two-channel sound data produced by the down-mixing.

The gain adjusting unit 75 adjusts a gain of the two-channel sound data outputted from the down-mix unit 73, based on gain adjustment information outputted from the first decoder 55, and outputs the gain-adjusted two-channel sound data.

Similarly to sampling frequency converters 59a, 59b, 59c, the sampling frequency converter 77 converts a sampling frequency of the two-channel sound data outputted from the gain adjusting unit 75 to a predetermined sampling frequency. Consequently, sampling frequencies of the sound data decoded by the first and second decoders 55, 57a, 57b and the sound data gain-adjusted by the gain adjusting unit 75 are converted to the same sampling frequency.

Having the down-mix unit 73 and the gain adjusting unit 75, the down-mix processor 71 obtains the two-channel sound data produced by the down-mixing and gain-adjusted, from the N-channel sound data inputted from the first decoder 55 and outputs the obtained sound data. The sampling frequency of the sound data outputted from the down-mix processor 71 is the same as the sampling frequency of the respective sound data inputted to the first mixing unit 81 and the second mixing unit 83 as a result of the conversion by the sampling frequency converter 77.

The sound data (the N-channel sound data and the two two-channel sound data) supplied from the input unit 51 are inputted to the first mixing unit 81 as are inputted to the mixing unit 63. The first mixing unit 81 applies mixing processing to the inputted sound data, based on a predetermined mixing coefficient. Specifically, the first mixing unit 81 mixes the N-channel sound data and the two two-channel sound data based on the predetermined mixing coefficient and outputs N-channel sound data produced by the mixing of these sound data.

The two two-channel sound data supplied from the input unit 51 and the two-channel sound data outputted from the down-mix processor 71 are inputted to the second mixing unit 83. The second mixing unit 83 applies mixing processing to the inputted sound data based on the predetermined mixing coefficient. Specifically, the second mixing unit 83 mixes the three two-channel sound data based on the predetermined mixing coefficient and outputs two-channel sound data produced by the mixing of these sound data.

Consequently, the processing unit 61 obtains the N-channel sound data produced by the mixing and the two-channel sound data produced by the mixing, from the N-channel sound data and the two-channel sound data which are inputted from the input unit 51, and outputs these sound data from respective sound output ports 70a, 70b.

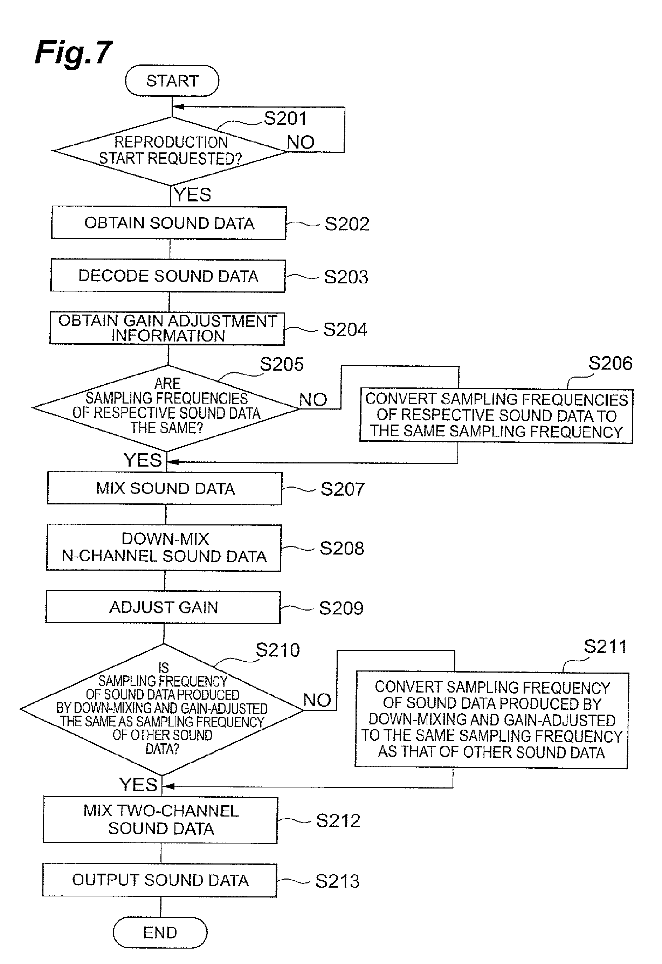

FIG. 7 is a flowchart to describe main operations of the sound mixing processor shown in FIG. 6. Specifically, when the processing is started, the CPU 37 of the optical disk apparatus determines whether or not reproduction start of the optical disk 11 has been requested (S201).

When determining that the reproduction has been requested, the CPU 37 obtains encoded sound data (N-channel sound data and two two-channel sound data) from the optical disk 11 (S202), and causes the decoders 55, 57a, 57b to decode the sound data respectively (S203). Further, the CPU 37 causes the first decoder 55 to obtain gain adjustment information (S204). The gain adjustment information is recorded in an encoded state on the optical disk 11 based on the standard.

Then, the CPU 37 determines whether or not sampling frequencies of the decoded sound data are the same (S205). When determining that the sampling frequencies are not the same, the CPU 37 causes the sampling frequency converters 59a, 59b, 59c to convert the sampling frequencies of the sound data to the same sampling frequency (S206).

When the sampling frequencies are the same, the CPU 37 causes the first mixing unit 81 to mix the sound data (the N-channel sound data and the two two-channel sound data) (S207).

Further, the CPU 37 causes the down-mix unit 73 to down-mix the N-channel sound data decoded by the first decoder 55 to two-channel sound data (S208). Next, the CPU 37 causes the gain adjusting unit 75 to adjust a gain of the two-channel sound data produced by the down-mixing, based on the gain adjustment information obtained by the first decoder 55 (S209).

The CPU 37 determines whether or not a sampling frequency of the two-channel sound data produced by the down-mixing and gain-adjusted is the same as the sampling frequency of the other sound data (S210). When determining that the sampling frequencies are not the same, the CPU 37 causes the sampling frequency converter 77 to convert the sampling frequency of the two-channel sound data produced by the down-mixing and gain-adjusted to the same sampling frequency as the sampling frequency of the other sound data (S211).

When the sampling frequencies are the same, the CPU 37 causes the second mixing unit 83 to mix the sound data (the three two-channel sound data) (S212).

Thereafter, the CPU 37 causes the processing unit 61 to output the N-channel sound data produced by the mixing and the two-channel sound data produced by the mixing (S213).

As descried above, in the modified example shown in FIG. 6 and FIG. 7, the sound mixing processor 41 outputs the N-channel sound data and the two-channel sound data both of which are produced by the mixing. This two-channel sound data is produced by the mixing of the two-channel sound data produced by the down-mixing and gain-adjusted and the two two-channel sound data. Therefore, it is possible to prevent a great difference in sound level between two-channel reproduction output based on the two-channel sound data produced by the down-mixing and N-channel reproduction output based on the N-channel sound data.

Incidentally, in the embodiment shown in FIG. 3 and FIG. 4, the two-channel sound data outputted from the second decoders 57a, 57b are finally gain-adjusted by the gain adjusting unit 75 based on the gain adjustment information regarding the N-channel sound data having no relation with these two-channel sound data. This sometimes causes a decrease in the sound level, which is not intended by a contents creator, in the two-channel sound data outputted from the second decoders 57a, 57b.

On the other hand, in the modified example shown in FIG. 6 and FIG. 7, the two-channel sound data outputted from the second decoders 57a, 57b are not gain-adjusted by the gain adjusting unit 75. Therefore, it is possible to prevent the two-channel sound data outputted from the second decoders 57a, 57b from suffering the aforesaid unintended decrease in the sound level.

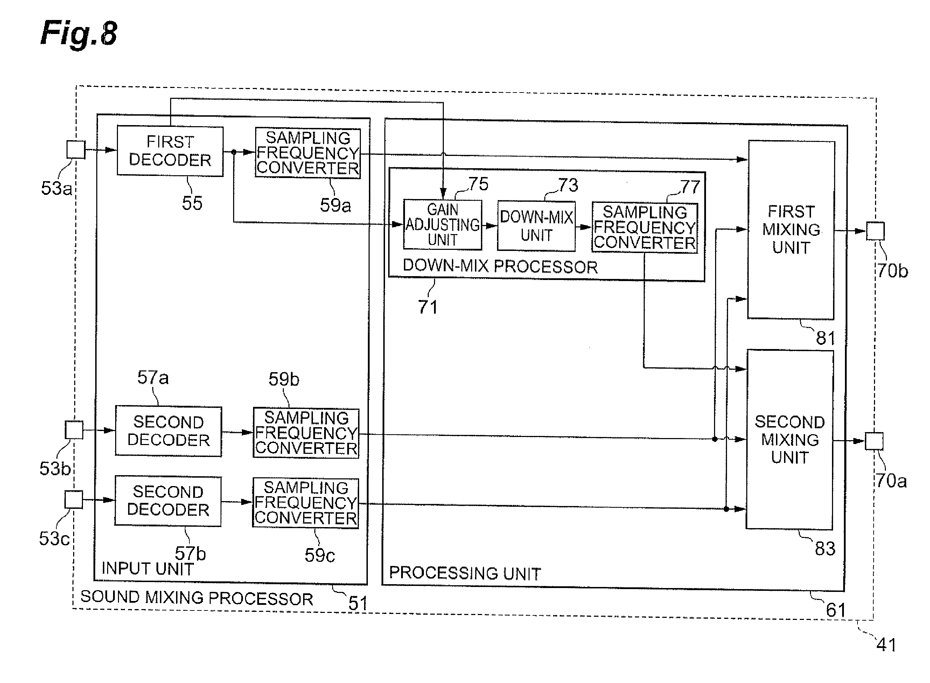

In the down-mix processor 71 shown in FIG. 6, the gain adjusting unit 75 is positioned on a subsequent stage of the down-mix unit 73, but the gain adjusting unit 75 may be positioned on a preceding stage of the down-mix unit 73 as shown in FIG. 8. In this case, the gain adjusting unit 75 adjusts a gain of the N-channel sound data outputted from the first decoder 55, based on the gain adjustment information outputted from the first decoder 55 and outputs the gain-adjusted N-channel sound data. The down-mix unit 73 down-mixes the N-channel sound data outputted from the gain adjusting unit 75 to two-channel sound data and outputs the two-channel sound data gain-adjusted and produced by the down mixing.

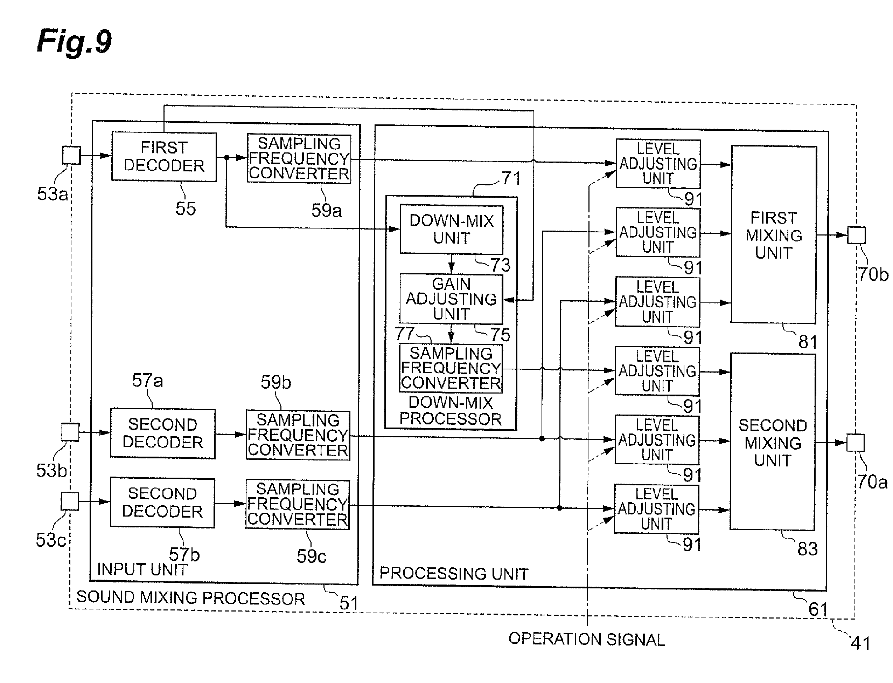

Next, the configuration of another modified example of the sound mixing processor 41 will be described with reference to FIG. 9. FIG. 9 is a block diagram showing the configuration of the other modified example of the sound mixing processor. The sound mixing processor 41 shown in FIG. 9 is different from the sound mixing processor 41 shown in FIG. 6 especially in that the former has a level adjusting unit 91.

A processing unit 61 of the sound mixing processor 41 has a down-mix processor 71, a first mixing unit 81, a second mixing unit 83, and a plurality of level adjusting units 91.

The level adjusting units 91 are positioned on preceding stages of the first and second mixing units 81, 83. The level adjusting units 91 adjust sound levels of sound data to be inputted to the first and second mixing units 81, 83, based on an operation signal from an operation unit (not shown) operated by a user. Consequently, the sound levels of the sound data to be inputted to the first and second mixing units 81, 83 are adjusted in the level adjusting units 91 based on the operation of the user. The level adjusting units 91 are capable of setting sound mute and adjusting volume increase/decrease of the respective sound data. Owing to the level adjusting units 91, the respective sound data can be set to sound levels according to user's preference.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A sound mixing processing apparatus (41) comprising:
an input unit (51) inputting N-channel (N ≥ 3) sound data and two-channel sound data;
a mixing unit (63) mixing the N-channel sound data and the two-channel sound data inputted from the input unit (51) to output N-channel sound data produced by the mixing; and
a down-mix processing unit (65) obtaining two-channel sound data produced by down-mixing and gain-adjusted, from the N-channel sound data inputted from the mixing unit (63), to output the obtained sound data.

2. The sound mixing processing apparatus (41) according to claim 1,
wherein encoded N-channel sound data and encoded two-channel sound data are inputted to the input unit (51),
wherein the input unit (51) has a first decoder (55) decoding the inputted encoded N-channel sound data and a second decoder (57a, 57b) decoding the inputted encoded two-channel sound data,
wherein the first decoder (55) obtains gain adjustment information included in the encoded N-channel sound data to output the gain adjustment information to the down-mix processing unit (65), and
wherein the down-mix processing unit (65) adjusts the gain based on the gain adjustment information outputted from the first decoder (55).

3. A sound mixing processing apparatus (41) comprising:
an input unit (51) inputting N-channel (N ≥ 3) sound data and two-channel sound data;
a first mixing unit (81) mixing the N-channel sound data and the two-channel sound data inputted from the input unit (51) to output N-channel sound data produced by the mixing;
a down-mix processing unit (71) obtaining two-channel sound data produced by down-mixing and gain-adjusted, from the N-channel sound data inputted from the input unit (51), to output the obtained sound data; and
a second mixing unit (83) mixing the two-channel sound data inputted from the input unit (51) and the two-channel sound data produced by the down-mixing and gain-adjusted, which is inputted from the down-mix processing unit (71), to output two-channel sound data produced by the mixing.

4. The sound mixing processing apparatus (41) according to claim 3, further comprising
a level adjusting unit (91) positioned on a preceding stage of the first and second mixing units (81, 83) and adjusting sound levels of the sound data to be inputted to the first and second mixing units (81, 83), based on an operation of a user.

5. The sound mixing processing apparatus (41) according to claim 3 or 4,
wherein encoded N-channel sound data and encoded two-channel sound data are inputted to the input unit (51),
wherein the input unit (51) has a first decoder (55) decoding the inputted encoded N-channel sound data and a second decoder (57a, 57b) decoding the inputted encoded two-channel sound data,
wherein the first decoder (55) obtains gain adjustment information included in the encoded N-charznel sound data to output the gain adjustment information to the down-mix processing unit (71), and
wherein the down-mix processing unit (71) adjusts the gain based on the gain adjustment information outputted from the first decoder (55).

6. The sound mixing processing apparatus (41) according to claim 5,
wherein the input unit (51) further has a sampling frequency converter (59a, 59b, 59c) converting sampling frequencies of the sound data decoded by the first and second decoders (55, 57a, 57b) to a predetermined sampling frequency, and
wherein the down-mix processing unit (71) has a sampling frequency converter (77) converting a sampling frequency of the two-channel sound data produced by the down-mixing and gain-adjusted to the predetermined sampling frequency.

7. The sound mixing processing apparatus (41) according to claim 1 or 3,
wherein the down-mix processing unit (65, 71) has a down-mix unit (67, 73) down-mixing the inputted N-channel sound data and a gain adjusting unit (69, 75) adjusting the gain of the two-channel sound data produced by the down-mixing by the down-mix unit (67, 73).

8. The sound mixing processing apparatus (41) according to claim 1 or 3,
wherein the down-mix processing unit (65, 71) has a gain adjusting unit (69, 75) adjusting a gain of the inputted N-channel sound data and a down-mix unit (67, 73) down-mixing the N-channel sound data gain-adjusted by the gain adjusting unit (69, 75).

9. The sound mixing processing apparatus (41) according to claim 7 or 8,
wherein encoded N-channel sound data and encoded two-channel sound data are inputted to the input unit (51),
wherein the input unit (51) has a first decoder (55) decoding the inputted encoded N-channel sound data and a plurality of second decoders (57a, 57b) decoding the inputted encoded two-channel sound data,
wherein the first decoder (55) obtains gain adjustment information included in the encoded N-channel sound data to output the gain adjustment information to the gain adjusting unit (69, 75), and
wherein the gain adjusting unit (69, 75) adjusts the gain based on the gain adjustment information outputted from the first decoder (55).

10. A sound mixing processing method comprising:
a first step (51, S102-S106) of inputting N-channel (N ≥ 3) sound data and two-channel sound data;
a second step (63, S107) of mixing the N-channel sound data and the two-channel sound data inputted in the first step (51, S102-S106) to output N-channel sound data produced by the mixing; and
a third step (65, S108-S110) of obtaining two-channel sound data produced by down-mixing and gain-adjusted, from the N-channel sound data outputted in the second step (63, S107), to output the obtained sound data.

11. A sound mixing processing method comprising:
a first step (51, S202-S206) of inputting N-channel (N ≥ 3) sound data and two-channel sound data;
a second step (81, S207, S213) of mixing the N-channel sound data and the two-channel sound data inputted in the first step (51, S202-S206) to output N-channel sound data produced by the mixing;
a third step (71, S208-S211) of obtaining two-channel sound data produced by down-mixing and gain-adjusted, from the N-channel sound data inputted in the first step (51, S202-S206), to output the obtained sound data; and
a fourth step (83, S212, S213) of mixing the two-channel sound data inputted in the first step (51, S202-S206) and the two-channel sound data produced by the down-mixing and gain-adjusted, which is outputted in the third step (71, S208-S211), to output two-channel sound data produced by the mixing.
